# EUROPÄISCHE PATENTSCHRIFT

(11) **EP 1 980 429 B1**
(45) Veröffentlichungstag und Bekanntmachung des Hinweises auf die Patenterteilung: **23.01.2013**
(21) Anmeldenummer: 08002245.2
(22) Anmeldetag: 07.02.2008
(51) Int. Cl.: B60G 17/016, B60G 17/018

(54) **Verfahren und Vorrichtung zur Wankstabilisierung eines Kraftfahrzeuges**
Method and device for stabilising the roll of a motor vehicle
Procédé et dispositif de stabilisation de roulis d'un véhicule automobile

(30) Priorität: 12.04.2007 DE 102007017245
(43) Veröffentlichungstag der Anmeldung: 15.10.2008
(73) Patentinhaber: Dr. Ing. h.c. F. Porsche AG, 70435 Stuttgart (DE)
(72) Erfinder: Fischlein, Hartmut, 70825 Korntal-Münchingen (DE); Ferger-Andrews, Robert, 71665 Vaihingen/Enz (DE)

(56) Entgegenhaltungen:
- EP-A- 0 427 909
- EP-A- 0 495 371
- EP-A- 1 338 490
- EP-A- 1 568 521
- EP-A- 1 661 740
- WO-A-99/64262
- DE-A1- 19 738 826
- JP-A- 5 016 633
- US-A- 5 144 558
- US-A1- 2001 021 885
- US-A1- 2004 176 890
- US-A1- 2005 055 148
- US-B1- 6 175 792
- US-B1- 6 397 134
- US-B1- 6 687 594

## Beschreibung

Die Erfindung betrifft ein Verfahren zur Wankstabilisierung eines Kraftfahrzeugs nach dem Oberbegriff des Anspruchs 1. Des Weiteren betrifft die Erfindung eine Vorrichtung zur Wankstabilisierung eines Kraftfahrzeugs nach dem Oberbegriff des Anspruchs 10.

Die Dokument US-A-2004/176850, DE-A-197 38 826, JP-A-05 016633, US-A-5 144 558, EP-A-0 495 371 offenbaren jeweils ein Verfahren bzw. eine Vorrichtung zur Wankstabilisierung eines Kraftfahrzeugs nach den Oberbegriff des Anspruchs 1 bzw des Anspruchs 10.

Das Fahrverhalten eines Kraftfahrzeugs wird durch eine Vielzahl von Kräften und Momenten bestimmt, die in Richtung von Kraftfahrzeugachsen, nämlich in Richtung einer Längsachse, einer Querachse, einer Hochachse sowie einer Wankachse, auf das Kraftfahrzeug einwirken. Unter der Wankachse wird eine Achse verstanden, die sich durch die Wankzentren von Vorderachse sowie Hinterachse des Kraftfahrzeugs erstreckt. Eine Rollbewegung des Kraftfahrzeugs um die Wankachse bezeichnet man als Wanken.

Zur Bereitstellung eines guten Fahrverhaltens eines Kraftfahrzeugs ist es aus dem Stand der Technik bereits bekannt, an einem Kraftfahrzeug eine Wankstabilisierung durchzuführen, wobei bei einer Wankstabilisierung auf Grundlage des Fahrzeugstands, gekennzeichnet durch z.B. eine gemessene Querbeschleunigung des Kraftfahrzeugs oder eine berechnete Querbeschleunigung des Kraftfahrzeugs, Stellsignale für Aktuatoren erzeugt werden, die der Vorderachse und der Hinterachse des Kraftfahrzeugs zugeordnet sind, und die an der Vorderachse und/oder an der Hinterachse zur Wankstabilisierung Abstützmomente bereitstellen. Bei den Aktuatoren handelt es sich typischerweise um hydraulisch verstellbare Stabilisatoren, die durch Ventilblöcke angesteuert werden können. Die Ventilblöcke erhalten ihre Stellsignale von einer Steuerungs- bzw. Regelungseinrichtung, die u.a. auf Grundlage der gemessenen oder berechneten Querbeschleunigung des Kraftfahrzeugs die Stellsignale generiert.

Aus DE 197 38 826 A1 ist ein Kurvenneigerfahrzeug mit aktiver Wankreglung bekannt, wobei der Sollwert für den einzustellenden Wankwinkel Anteile umfasst, die mit einer auf Grund der Fahrgeschwindigkeit des fahrerseitigen Lenkmanövers zu erwartenden Querbeschleunigung korreliert sind.

Aus der US 2004/0176890 A1 ist ein Verfahren zum Beeinflussen des Wankverhaltens eines Fahrzeugs bekannt, wobei ein Stabilisator mit einem hydraulischen Aktuator vorgesehen ist, welcher eine kontrollierbare Kraft erzeugt und die Stabilisatorkraft zu den jeweiligen Rädern und dem Fahrzeugkörper übertragen wird, um den Fahrzeugwankbewegungen entgegen zu wirken, wodurch letztlich das Wankverhalten des Fahrzeugs verbessert wird.

Aus der US 5,144,558 ist ein System bekannt, welches anpassbare Aufhängungscharakteristiken aufweist, um ein Fahrzeug entsprechend seiner Fahrzbedingungen zu unterstützen und ein Wanken zu unterdrücken.

Aus der EP 0 495 371 A2 ist ferner eine aktive Aufhängung bekannt, welche Stellglieder umfasst, die vorgesehen sind jedem Rad des Fahrzeuges zu entsprechen, um so die Höhe die Fahrzeuges an einer entsprechenden Stelle zu ändern. Ferner umfasst die Aufhängung ein Querbeschleunigungserfassungsmittel zur Erfassung der tatsächlichen Querbeschleunigung, ein Fahrzeuggeschwindigkeitserfassungsmittel zur Erfassung der Fahrzeuggeschwindigkeit, ein Lenkwinkelerfassungsmittel zur Erfassung des Lenkmittels und ein Steuerungsmittel zur Steuerung aller Stellglieder in Übereinstimmung mit einem Ausmaß der Steuerung beruhend auf der tatsächlichen Querbeschleunigung und einer geschätzen Querbeschleunigung, die von dem Lenkwinkel und Fahrzeuggeschwindigkeit abgeleitet ist. Die Aufhängung zeichnet sich dadurch aus, dass das Steuerungsmittel das Ausmaß der Steuerung, das auf der geschätzten Querbeschleunigung beruht, zeitweise in Bezug auf das Ausmaß der Steuerung verringert, das auf der tatsächlichen Querbeschleunigung beruht, wenn ein Missverhältnis zwischen der geschätzten Querbeschleunigung und der tatsächlichen Querbeschleunigung über einen vorbestimmten Grenzwert der Beziehung hinaus zunimmt.

Aus der Druckschrift JP 05016633 wird ebenfalls ein Verfahren vorgeschlagen, die Wankstabilisierung eines Kraftfahrzeugs dadurch zu erzielen, dass eine berechnete Querbeschleunigung und eine gemessene Querbeschleunigung des Fahrzeugs verwendet werden.

Wie bereits ausgeführt, wird bei aus dem Stand der Technik bekannten Wankstabilisierungen entweder die gemessene Querbeschleunigung oder die berechnete Querbeschleunigung des Kraftfahrzeugs verwendet, um Stellsignale für Aktuatoren zu generieren. Die gemessene Querbeschleunigung enthält dabei Anteile aus Wankbewegungen sowie Querbewegungen des Fahrzeugaufbaus aufgrund von Fahrbahnanregungen sowie aufgrund von Kurvenfahrten. Die berechnete Querbeschleunigung berücksichtigt z.B. bei Kurvenfahrten nur Anteile aus der Fahrervorgabe, z.B. basierend auf dem Lenkwinkel, und ist daher aus Komfortgründen als Eingangsgröße für eine Wankstabilisierung besser geeignet als die gemessene Querbeschleunigung.

Eine berechnete Querbeschleunigung kann jedoch nicht in allen Zuständen eines Kraftfahrzeugs mit ausreichender Genauigkeit berechnet werden, weshalb üblicherweise die gemessene Querbeschleunigung als Eingangsgröße für die Wankstabilisierung verwendet wird.

Hiervon ausgehend liegt der vorliegenden Erfindung das Problem zu Grunde ein neuartiges Verfahren sowie eine neuartige Vorrichtung zur Wankstabilisierung eines Kraftfahrzeugs zu schaffen.

Dieses Problem wird durch ein Verfahren zur Wankstabilisierung eines Kraftfahrzeugs gemäß Anspruch 1 gelöst. Erfindungsgemäß werden innerhalb mindestens eines Geschwindigkeitsbereichs des Kraftfahrzeugs die gemessene Querbeschleunigung und die berechnete Querbeschleunigung derart zur Erzeugung der Stellsignale für die Aktuatoren verwendet, dass abhängig von einem Absolutwert der Differenz zwischen der berechneten Querbeschleunigung des Kraftfahrzeugs und der gemessenen Querbeschleunigung des Kraftfahrzeugs entweder die berechnete Querbeschleunigung oder die gemessene Querbeschleunigung zur Erzeugung der Stellsignale verwendet wird, wobei dann, wenn der Absolutwert der Differenz zwischen der berechneten Querbeschleunigung und der gemessenen Querbeschleunigung kleiner als ein erster Grenzwert ist, die berechnete Querbeschleunigung zur Erzeugung der Stellsignale verwendet wird, und dann, wenn die berechnete Querbeschleunigung zur Erzeugung der Stellsignale verwendet wird und der Absolutwert der Differenz zwischen der berechneten Querbeschleunigung und der gemessenen Querbeschleunigung den ersten Grenzwert überschreitet, anschließend als Querbeschleunigung zur Erzeugung der Stellsignale ein erster fester Querbeschleunigungswert verwendet wird und der erste feste Querbeschleunigungswert demjenigen Wert der berechneten Querbeschleunigung entspricht, bei dem der erste Grenzwert überschritten wird bzw. überschritten worden ist.

Mit der hier vorliegenden Erfindung wird erstmals vorgeschlagen, zwischen der gemessenen Querbeschleunigung und der berechneten Querbeschleunigung als Eingangsgröße für die Wankstabilisierung auf Grundlage definierter Kriterien umzuschalten. Hierdurch kann die Wankstabilisierung hinsichtlich Fahrsicherheit und Fahrkomfort verbessert werden. Das erfindungsgemäße Umschalten zwischen gemessener Querbeschleunigung und berechneter Querbeschleunigung als Eingangsgröße für die Wankstabilisierung erfolgt innerhalb mindestens eines definierten Geschwindigkeitsbereichs. Außerhalb des oder jedes definierten Geschwindigkeitsbereichs wird als Eingangsgröße für die Wankstabilisierung die gemessene Querbeschleunigung verwendet.

Die erfindungsgemäße Vorrichtung zur Wankstabilisierung eines Kraftfahrzeugs ist in Anspruch 10 definiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
ein Blockschaltbild einer erfindungsgemäßen Vorrichtung zur Wankstabilisierung eines Kraftfahrzeugs;
ein Diagramm zur Verdeutlichung des erfindungsgemäßen Verfahrens zur Wankstabilisierung eines Kraftfahrzeugs nach einem ersten Ausführungsbeispiel der Erfindung; und
ein Diagramm zur Verdeutlichung des erfindungsgemäßen Verfahrens zur Wankstabilisierung eines Kraftfahrzeugs nach einem zweiten Ausführungsbeispiel der Erfindung.

Die hier vorliegende Erfindung betrifft eine Vorrichtung und ein Verfahren zur Wankstabilisierung eines Kraftfahrzeugs, wobei unter dem Wanken eine Kippbewegung des Kraftfahrzeugs um eine Wankachse desselben verstanden wird. Bei der Wankachse handelt es sich um eine Achse, die sich durch das Wankzentrum der Vorderachse sowie das Wankzentrum der Hinterachse des Kraftfahrzeugs erstreckt. Bei einem Wankzentrum einer Achse handelt es sich um den Punkt auf einer in der Achsmitte gedachten Senkrechten, um den sich der Fahrzeugaufbau unter Einwirkung von Seitenkräften zu Drehen beginnt.

Eine Vorrichtung zur Wankstabilisierung umfasst der Vorderachse und/oder Hinterachse zugeordnete Aktuatoren, die an der Vorderachse und/oder an der Hinterachse Abstützmomente zur Wankstabilisierung bereitstellen, nämlich abhängig von einer gemessenen Querbeschleunigung oder einer berechneten Querbeschleunigung des Kraftfahrzeugs. Eine Vorrichtung zur Wankstabilisierung ist dabei vorzugsweise als hydraulisches System ausgeführt, wobei dann die der Vorderachse sowie der Hinterachse zugeordneten Aktuatoren als hydraulisch verstellbare Stabilisatoren ausgeführt sind, die über Ventilblöcke angesteuert werden können. Stellsignale zur Ansteuerung der Ventilblöcke werden von einer Steuerungs- bzw. Regelungseinrichtung bereitgestellt, nämlich auf Grundlage der gemessenen Querbeschleunigung oder der berechneten Querbeschleunigung des Kraftfahrzeugs.

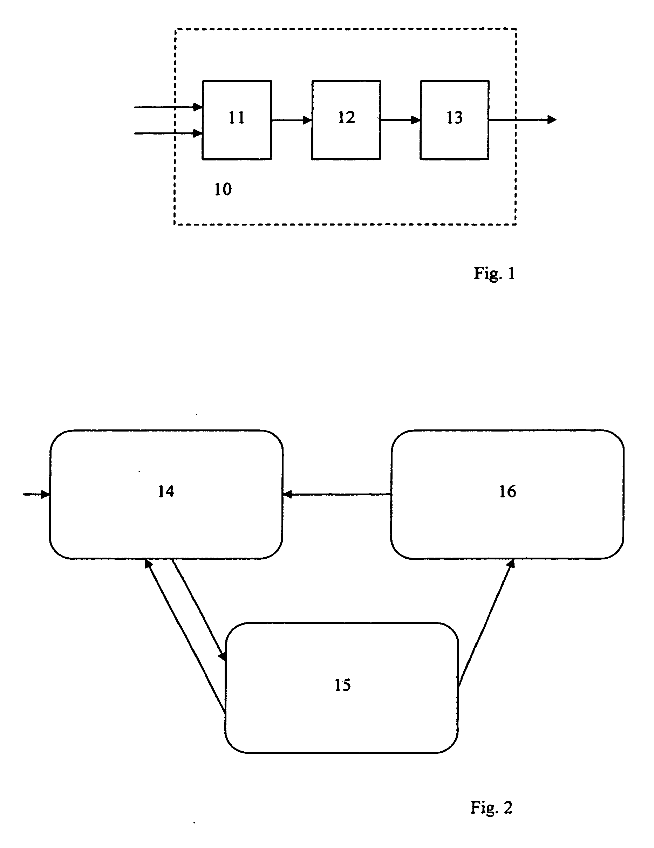

Fig. 1 zeigt einen Ausschnitt aus einer Vorrichtung zur Wankstabilisierung, nämlich eine Steuerungs- bzw. Regelungseinrichtung 10, der als Eingangsgrößen zumindest die gemessene Querbeschleunigung und die berechnete Querbeschleunigung des Kraftfahrzeugs zugeführt werden, und die als Ausgangsgröße Stellbefehle für die Aktuatoren, insbesondere für Ventilblöcke hydraulisch verstellbarer Stabilisatoren ausgibt. Die Vorrichtung zur Wankstabilisierung kann beispielsweise auch als elektrisches System ausgeführt sein und elektrisch verstellbare Stabilisatoren aufweisen. Die Vorrichtung zur Wankstabilisierung kann auch als elektro-hydraulisches System ausgeführt sein.

Gemäß Fig. 1 umfasst die Steuerungs- bzw. Regelungseinrichtung drei Hauptkomponenten, nämlich eine Vorsteuereinrichtung 11, eine Regeleinrichtung 12 sowie eine Einrichtung 13 zur Bestimmung einer Momentverteilung zwischen einem an der Vorderachse bereitgestellten Abstützmoment und einem an der Hinterachse bereitgestellten Abstützmoment.

Die Vorsteuereinrichtung 11 generiert aus der gemessenen Querbeschleunigung oder der berechneten Querbeschleunigung des Kraftfahrzeugs eine Vorsteuerkomponente zur Wankstabilisierung, wobei die Regeleinrichtung 12 ungenaue Vorgaben der Vorsteuerung durch eine Regelung korrigiert. Auf Grundlage der Vorsteuerung über die Vorsteuereinrichtung 11 sowie der Regelung über die Regeleinrichtung 12 bestimmt die Einrichtung 13 eine Momentverteilung zwischen dem an der Vorderachse bereitgestellten Abstützmoment und dem an der Hinterachse bereitgestellten Abstützmoment zur Wankstabilisierung des Kraftfahrzeugs.

Die hier vorliegende Erfindung betrifft solche Details einer Wankstabilisierung, mit welchen entschieden wird, ob die gemessene Querbeschleunigung oder die berechnete Querbeschleunigung des Kraftfahrzeugs zur Generierung der Stellsignale für die Aktuatoren verwendet wird. Diese Auswahl erfolgt insbesondere in der Vorsteuereinrichtung 11 der Steuer- bzw. Regelungseinrichtung 10.

Im Sinne des erfindungsgemäßen Verfahrens werden innerhalb mindestens eines Geschwindigkeitsbereichs des Kraftfahrzeugs die gemessene Querbeschleunigung und die berechnete Querbeschleunigung derart zur Erzeugung der Stellsignale für die Aktuatoren verwendet, dass abhängig von einem Absolutwert der Differenz zwischen der berechneten Querbeschleunigung des Kraftfahrzeugs und der gemessenen Querbeschleunigung des Kraftfahrzeugs entweder die berechnete Querbeschleunigung oder die gemessene Querbeschleunigung zur Erzeugung der Stellsignale verwendet wird. Außerhalb des oder jedes Geschwindigkeitsbereichs des Kraftfahrzeugs wird ausschließlich die gemessene Querbeschleunigung des Kraftfahrzeugs zur Erzeugung der Stellsignale verwendet.

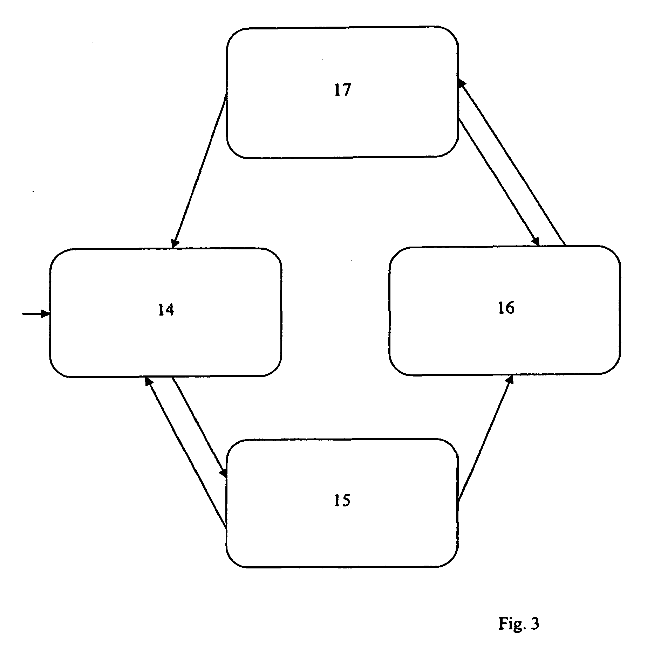

Nachfolgend werden unter Bezugnahme auf Fig. 2 und 3 bevorzugte Ausführungsbeispiele des erfindungsgemäßen Verfahrens im Detail beschrieben.

So zeigt Fig. 2 ein erstes Ausführungsbeispiel des erfindungsgemäßen Verfahrens zur Wankstabilisierung, welches dann zum Einsatz kommt, wenn das Kraftfahrzeug in dem oder jedem definierten Geschwindigkeitsbereich betrieben wird. Fährt demnach das Kraftfahrzeug mit einer Geschwindigkeit, die innerhalb eines der definierten Geschwindigkeitsbereiche liegt, so kommt das in Fig. 2 dargestellte Verfahren zum Einsatz. Dann, wenn innerhalb des oder jedes Geschwindigkeitsbereichs ein Absolutwert der Differenz zwischen der berechneten Querbeschleunigung und der gemessenen Querbeschleunigung kleiner als ein erster Grenzwert ist, wird die berechnete Querbeschleunigung zur Erzeugung der Stellsignale für die Aktuatoren der Wankstabilisierung verwendet. Dies ist in Fig. 2 durch den Block 14 dargestellt.

Dann, wenn gemäß Block 14 die berechnete Querbeschleunigung zur Erzeugung der Stellsignale verwendet wird und der Absolutwert der Differenz zwischen der berechneten Querbeschleunigung und der gemessenen Querbeschleunigung den ersten Grenzwert überschreitet, wird ausgehend von Block 14 auf Block 15 verzweigt, wobei dann anschließend in Block 15 als Querbeschleunigung zur Erzeugung der Stellsignale ein erster fester Querbeschleunigungswert verwendet wird. Dieser erste feste Querbeschleunigungswert entspricht demjenigen Wert der berechneten Querbeschleunigung, bei dem der erste Grenzwert überschritten wird bzw. überschritten worden ist.

Dann, wenn gemäß Block 16 der erste feste Querbeschleunigungswert zur Erzeugung der Stellsignale verwendet wird, und der Absolutwert der Differenz zwischen der berechneten Querbeschleunigung und der gemessenen Querbeschleunigung den ersten Grenzwert unterschreitet, wird von Block 15 auf Block 14 verzweigt, wobei dann anschließend gemäß Block 14 die berechnete Querbeschleunigung zur Erzeugung der Stellsignale verwendet wird.

Dann hingegen, wenn gemäß Block 15 der erste feste Querbeschleunigungswert zur Erzeugung der Stellsignale verwendet wird, und ein Absolutwert der Differenz zwischen der gemessenen Querbeschleunigung und dem ersten festen Querbeschleunigungswert einen zweiten Grenzwert überschreitet oder einen dritten Grenzwert unterschreitet, wird von Block 15 auf Block 16 verzweigt, wobei dann anschließend in Block 16 als Querbeschleunigung zur Erzeugung der Stellsignale die gemessene Querbeschleunigung verwendet wird. Bei dem zweiten Grenzwert handelt es sich vorzugsweise um den ersten Grenzwert zuzüglich eines Offsets.

Dann, wenn gemäß Block 16 die gemessene Querbeschleunigung zur Erzeugung der Stellsignale verwendet wird und der Absolutwert der Differenz zwischen der gemessenen Querbeschleunigung und der berechneten Querbeschleunigung den ersten Grenzwert unterschreitet, wird von Block 16 auf Block 14 verzweigt, und anschließend wieder die berechnete Querbeschleunigung zur Erzeugung der Stellsignale für die Aktuatoren der Wankstabilisierung verwendet.

Ein zweites Ausführungsbeispiel des erfindungsgemäßen Verfahrens zur Wankstabilisierung eines Kraftfahrzeugs zeigt Fig. 3, wobei es sich bei dem Ausführungsbeispiel der Fig. 3 um eine bevorzugte Weiterbildung des Ausführungsbeispiels der Fig. 2 handelt.

Zur Vermeidung unnötiger Wiederholungen werden daher für gleiche Blöcke gleiche Bezugsziffern verwendet. Das Ausführungsbeispiel der Fig. 3 unterscheidet sich vom Ausführungsbeispiel der Fig. 2 dadurch, dass nicht unmittelbar von Block 16 auf den Block 14 verzweigt wird, sondern lediglich mittelbar über einen Block 17.

Beim Ausführungsbeispiel der Fig. 3 wird demnach dann, wenn gemäß Block 16 die gemessene Querbeschleunigung zur Erzeugung der Stellsignale verwendet wird und der Absolutwert der Differenz zwischen der gemessenen Querbeschleunigung und der berechneten Querbeschleunigung den ersten Grenzwert unterschreitet, nicht auf Block 14 verzweigt, sondern vielmehr auf Block 17, wobei dann gemäß Block 17 als Querbeschleunigung zur Erzeugung der Stellsignale ein zweiter fester Querbeschleunigungswert verwendet wird. Der zweite feste Querbeschleunigungswert entspricht demjenigen Wert der gemessenen Querbeschleunigung, bei dem der erste Grenzwert unterschritten wird bzw. unterschritten worden ist.

Dann, wenn gemäß Block 17 der zweite feste Querbeschleunigungswert zur Erzeugung der Stellsignale verwendet wird und der Absolutwert der Differenz zwischen der berechneten Querbeschleunigung und der gemessenen Querbeschleunigung den ersten Grenzwert überschreitet, wird ausgehend von Block 17 auf Block 16 verzweigt und anschließend wieder die gemessene Querbeschleunigung zur Erzeugung der Stellsignale verwendet.

Dann hingegen, wenn gemäß Block 17 der zweite feste Querbeschleunigungswert zur Erzeugung der Stellsignale verwendet wird und ein Absolutwert die Differenz zwischen der berechneten Querbeschleunigung und dem zweiten festen Querbeschleunigungswert einen vierten Grenzwert überschreitet oder einen fünften Grenzwert unterschreitet, wird ausgehend von Block 17 auf Block 14 verzweigt und anschließend als Querbeschleunigung zur Erzeugung der Stellsignale für die Aktuatoren der Wankstabilisierung die berechnete Querbeschleunigung verwendet. Bei dem vierten Grenzwert handelt es sich vorzugsweise um den ersten Grenzwert zuzüglich eines Offsets.

Es liegt demnach im Sinne des erfindungsgemäßen Verfahrens, innerhalb mindestens eines definierten Geschwindigkeitsbereichs des Kraftfahrzeugs bei der Ermittlung der Stellsignale für die Aktuatoren der Wankstabilisierung zwischen der gemessenen Querbeschleunigung und der berechneten Querbeschleunigung umzuschalten. Außerhalb des oder jedes definierten Geschwindigkeitsbereichs wird die gemessene Querbeschleunigung zur Ermittlung der Stellsignale verwendet. Innerhalb des oder jedes Geschwindigkeitsbereichs erfolgt die Umschaltung zwischen der berechneten Querbeschleunigung und der gemessenen Querbeschleunigung auf Grundlage der absoluten Differenz zwischen der gemessenen Querbeschleunigung und der berechneten Querbeschleunigung. Zumindest in der Umschaltrichtung von der berechneten Querbeschleunigung auf die gemessene Querbeschleunigung erfolgt die Umschaltung über einen festen Zwischenwert für die Querbeschleunigung. Zusätzlich kann ein solcher fester Zwischenwert auch in der Umschaltrichtung von der gemessenen Querbeschleunigung auf die berechnete Querbeschleunigung durchlaufen werden.

### Bezugszeichenliste

- 10: Steuerungs- bzw. Regelungseinrichtung
- 11: Vorsteuereinrichtung
- 12: Regeleinrichtung
- 13: Einrichtung zur Bestimmung einer Momentverteilung
- 14: Block
- 15: Block
- 16: Block
- 17: Block

## Patentansprüche

1. Verfahren zur Wankstabilisierung eines Kraftfahrzeugs, wobei auf Grundlage einer gemessenen Querbeschleunigung oder einer berechneten Querbeschleunigung des Kraftfahrzeugs Stellsignale für einer Vorderachse und/oder einer Hinterachse des Kraftfahrzeugs zugeordnete Aktuatoren erzeugt werden, die an der Vorderachse und/oder an der Hinterachse zur Wankstabilisierung Abstützmomente bereitstellen, wobei innerhalb mindestens eines Geschwindigkeitsbereichs des Kraftfahrzeugs die gemessene Querbeschleunigung und die berechnete Querbeschleunigung derart zur Erzeugung der Stellsignale für die Aktuatoren verwendet werden, dass abhängig von einem Absolutwert der Differenz zwischen der berechneten Querbeschleunigung des Kraftfahrzeugs und der gemessenen Querbeschleunigung des Kraftfahrzeugs entweder die berechnete Querbeschleunigung oder die gemessene Querbeschleunigung zur Erzeugung der Stellsignale verwendet wird, wobei dann, wenn der Absolutwert der Differenz zwischen der berechneten Querbeschleunigung und der gemessenen Querbeschleunigung kleiner als ein erster Grenzwert ist, die berechnete Querbeschleunigung zur Erzeugung der Stellsignale verwendet wird, **dadurch gekennzeichnet, dass** dann, wenn die berechnete Querbeschleunigung zur Erzeugung der Stellsignale verwendet wird und der Absolutwert der Differenz zwischen der berechneten Querbeschleunigung und der gemessenen Querbeschleunigung den ersten Grenzwert überschreitet, anschließend als Querbeschleunigung zur Erzeugung der Stellsignale ein erster fester Querbeschleunigungswert verwendet wird und der erste feste Querbeschleunigungswert demjenigen Wert der berechneten Querbeschleunigung entspricht, bei dem der erste Grenzwert überschritten wird bzw. überschritten worden ist.

2. Verfahren nach Anspruch 1, **dadurch gekennzeichnet, dass** dann, wenn der erste feste Querbeschleunigungswert zur Erzeugung der Stellsignale verwendet wird und der Absolutwert der Differenz zwischen der berechneten Querbeschleunigung und der gemessenen Querbeschleunigung den ersten Grenzwert unterschreitet, anschließend wieder die berechnete Querbeschleunigung zur Erzeugung der Stellsignale verwendet wird.

3. Verfahren nach Anspruch 1 oder 2, **dadurch gekennzeichnet, dass** dann, wenn der erste feste Querbeschleunigungswert zur Erzeugung der Stellsignale verwendet wird und ein Absolutwert der Differenz zwischen der gemessenen Querbeschleunigung und dem ersten festen Querbeschleunigungswert einen zweiten Grenzwert überschreitet oder einen dritten Grenzwert unterschreitet, anschließend als Querbeschleunigung zur Erzeugung der Stellsignale die gemessene Querbeschleunigung verwendet wird.

4. Verfahren nach Anspruch 3, **dadurch gekennzeichnet, dass** dann, wenn die gemessene Querbeschleunigung zur Erzeugung der Stellsignale verwendet wird und der Absolutwert der Differenz zwischen der gemessenen Querbeschleunigung und der berechneten Querbeschleunigung den ersten Grenzwert unterschreitet, anschließend wieder die berechnete Querbeschleunigung zur Erzeugung der Stellsignale verwendet wird.

5. Verfahren nach Anspruch 3, **dadurch gekennzeichnet, dass** dann, wenn die gemessene Querbeschleunigung zur Erzeugung der Stellsignale verwendet wird und der Absolutwert der Differenz zwischen der gemessenen Querbeschleunigung und der berechneten Querbeschleunigung den ersten Grenzwert unterschreitet, anschließend als Querbeschleunigung zur Erzeugung der Stellsignale ein zweiter fester Querbeschleunigungswert verwendet wird.

6. Verfahren nach Anspruch 5, **dadurch gekennzeichnet, dass** der zweite feste Querbeschleunigungswert demjenigen Wert der gemessenen Querbeschleunigung entspricht, bei dem der erste Grenzwert unterschritten wird bzw. unterschritten worden ist.

7. Verfahren nach Anspruch 5 oder 6, **dadurch gekennzeichnet, dass** dann, wenn der zweite feste Querbeschleunigungswert zur Erzeugung der Stellsignale verwendet wird und der Absolutwert der Differenz zwischen der berechneten Querbeschleunigung und der gemessenen Querbeschleunigung den ersten Grenzwert überschreitet, anschließend wieder die gemessene Querbeschleunigung zur Erzeugung der Stellsignale verwendet wird.

8. Verfahren nach einem der Ansprüche 5 bis 7, **dadurch gekennzeichnet, dass** dann, wenn der zweite feste Querbeschleunigungswert zur Erzeugung der Stellsignale verwendet wird und ein Absolutwert der Differenz zwischen der berechneten Querbeschleunigung und dem zweiten festen Querbeschleunigungswert einen vierten Grenzwert überschreitet oder einen fünften Grenzwert unterschreitet, anschließend als Querbeschleunigung zur Erzeugung der Stellsignale die berechnete Querbeschleunigung verwendet wird.

9. Verfahren nach einem der Ansprüche 1 bis 8, **dadurch gekennzeichnet, dass** außerhalb des oder jedes Geschwindigkeitsbereichs des Kraftfahrzeugs die gemessene Querbeschleunigung zur Erzeugung der Stellsignale für die Aktuatoren verwendet wird.

10. Vorrichtung zur Wankstabilisierung eines Kraftfahrzeugs, mit einer Einrichtung zur Messung oder Berechnung einer Querbeschleunigung des Kraftfahrzeugs, und mit einer Steuerungs- bzw. Regelungseinrichtung, die auf Grundlage der gemessenen oder berechneten Querbeschleunigung Stellsignale für einer Vorderachse und einer Hinterachse des Kraftfahrzeugs zugeordnete Aktuatoren erzeugt werden, die an der Vorderachse und/oder an der Hinterachse zur Wankstabilisierung Abstützmomente bereitstellen, **dadurch gekennzeichnet, dass** die Steuerungs- bzw. Regelungseinrichtung (10) eine Einrichtung (11) zur Durchführung des Verfahrens nach einem oder mehreren der Ansprüche 1 bis 9 umfasst.

## Claims

1. Method for stabilizing the roll of a motor vehicle, wherein actuation signals for actuators assigned to a front axle and/or a rear axle of the motor vehicle are generated on the basis of a measured lateral acceleration or a calculated lateral acceleration of the motor vehicle, which actuators make available supporting torques at the front axle and/or at the rear axle for the purpose of stabilizing the roll, wherein within at least one speed range of the motor vehicle the measured lateral acceleration and the calculated lateral acceleration are used to generate the actuation signals for the actuators in such a way that depending on an absolute value of the difference between the calculated lateral acceleration of the motor vehicle and the measured lateral acceleration of the motor vehicle either the calculated lateral acceleration or the measured lateral acceleration is used to generate the actuation signals, wherein if the absolute value of the difference between the calculated lateral acceleration and the measured lateral acceleration is smaller than a first limiting value, the calculated lateral acceleration is used to generate the actuation signals, **characterized in that** if the calculated lateral acceleration is used to generate the actuation signals and the absolute value of the difference between the calculated lateral acceleration and the measured lateral acceleration exceeds the first limiting value, a first fixed lateral acceleration value is subsequently used as a lateral acceleration to generate the actuation signals, and the first fixed lateral acceleration value corresponds to that value of the calculated lateral acceleration at which the first limiting value is exceeded or has been exceeded.

2. Method according to Claim 1, **characterized in that** if the first fixed lateral acceleration value is used to generate the actuation signals and the absolute value of the difference between the calculated lateral acceleration and the measured lateral acceleration exceeds the first limiting value, the calculated lateral acceleration is subsequently used again to generate the actuation signals.

3. Method according to Claim 1 or 2, **characterized in that** if the first fixed lateral acceleration value is used to generate the actuation signals and an absolute value of the difference between the measured lateral acceleration and the first fixed lateral acceleration value exceeds a second limiting value or undershoots a third limiting value, the measured lateral acceleration is subsequently used as a lateral acceleration to generate the actuation signals.

4. Method according to Claim 3, **characterized in that** if the measured lateral acceleration is used to generate the actuation signals and the absolute value of the difference between the measured lateral acceleration and the calculated lateral acceleration undershoots the first limiting value, the calculated lateral acceleration is subsequently used again to generate the actuation signals.

5. Method according to Claim 3, **characterized in that** if the measured lateral acceleration is used to generate the actuation signals and the absolute value of the difference between the measured lateral acceleration and the calculated lateral acceleration undershoots the first limiting value, a second fixed lateral acceleration value is subsequently used as a lateral acceleration to generate the actuation signals.

6. Method according to Claim 5, **characterized in that** the second fixed lateral acceleration value corresponds to that value of the measured lateral acceleration at which the first limiting value is undershot or has been undershot.

7. Method according to Claim 5 or 6, **characterized in that** if the second fixed lateral acceleration value is used to generate the actuation signals and the absolute value of the difference between the calculated lateral acceleration and the measured lateral acceleration exceeds the first limiting value, the measured lateral acceleration is subsequently used again to generate the actuation signals.

8. Method according to one of Claims 5 to 7, **characterized in that** if the second fixed lateral acceleration value is used to generate the actuation signals and an absolute value of the difference between the calculated lateral acceleration and the second fixed lateral acceleration value exceeds a fourth limiting value or undershoots a fifth limiting value, the calculated lateral acceleration is subsequently used as a lateral acceleration to generate the actuation signals.

9. Method according to one of Claims 1 to 8, **characterized in that** outside the speed range, or each speed range, of the motor vehicle, the measured lateral acceleration is used to generate the actuation signals for the actuators.

10. Device for stabilizing the roll of a motor vehicle, having an apparatus for measuring or calculating a lateral acceleration of the motor vehicle, and having an open-loop and/or closed-loop control apparatus which, on the basis of the measured or calculated lateral acceleration, generates actuation signals for actuators which are assigned to a front axle and a rear axle of the motor vehicle and which make available supporting torques at the front axle and/or at the rear axle for the purpose of stabilizing the roll, **characterized in that** the open-loop and/or closed-loop control apparatus (10) comprises an apparatus (11) for carrying out the method according to one or more of Claims 1 to 9.

## Revendications

1. Procédé de stabilisation de roulis d'un véhicule automobile, des signaux de réglage des actionneurs associés à un essieu avant et/ou à un essieu arrière du véhicule automobile étant produits sur la base d'une accélération transversale mesurée ou d'une accélération transversale calculée du véhicule automobile, lesdits actionneurs mettant à disposition des couples de soutien au niveau de l'essieu avant et/ou de l'essieu arrière pour la stabilisation du roulis, l'accélération transversale mesurée et l'accélération transversale calculée étant utilisées de telle sorte pour produire les signaux de réglage destinés aux actionneurs dans au moins une plage de vitesses du véhicule automobile qu'en fonction d'une valeur absolue de différence entre l'accélération transversale calculée du véhicule automobile et l'accélération transversale mesurée du véhicule automobile, soit l'accélération transversale calculée soit l'accélération transversale mesurée sont utilisées pour produire les signaux de réglage, lorsque la valeur absolue de différence entre l'accélération transversale calculée et l'accélération transversale mesurée est inférieure à une première valeur limite, on utilise l'accélération transversale calculée pour produire les signaux de réglage, **caractérisé en ce que** lorsqu'on utilise l'accélération transversale calculée pour produire les signaux de réglage et que la valeur absolue de différence entre l'accélération transversale calculée et l'accélération transversale mesurée passe en dessous de la première valeur limite, on utilise ensuite une première valeur d'accélération transversale comme accélération transversale pour produire les signaux de réglage et que la première valeur d'accélération transversale fixe correspond à la valeur de l'accélération transversale calculée à laquelle la première valeur limite est dépassée et/ou a été dépassée.

2. Procédé selon la revendication 1, **caractérisé en ce que** lorsqu'on utilise la première valeur d'accélération transversale fixe pour produire les signaux de réglage et que la valeur absolue de différence entre l'accélération transversale calculée et l'accélération transversale mesurée passe en dessous de la première valeur limite, on utilise ensuite de nouveau l'accélération transversale calculée pour produire les signaux de réglage.

3. Procédé selon la revendication 1 ou 2, **caractérisé en ce que** lorsqu'on utilise la première valeur d'accélération transversale fixe pour produire les signaux de réglage et qu'une valeur absolue de différence entre l'accélération transversale mesurée et la première valeur d'accélération transversale fixe passe au-dessus d'une deuxième valeur limite ou passe en dessous d'une troisième valeur limite, on utilise ensuite l'accélération transversale mesurée comme accélération transversale pour produire les signaux de réglage.

4. Procédé selon la revendication 3, **caractérisé en ce que** lorsqu'on utilise l'accélération transversale mesurée pour produire les signaux de réglage et que la valeur absolue de différence entre l'accélération transversale mesurée et l'accélération transversale calculée passe en dessous de la première valeur limite, on utilise ensuite de nouveau l'accélération transversale calculée pour produire les signaux de réglage.

5. Procédé selon la revendication 3, **caractérisé en ce que** lorsqu'on utilise l'accélération transversale mesurée pour produire les signaux de réglage et que la valeur absolue de différence entre l'accélération transversale mesurée et l'accélération transversale calculée passe en dessous de la première valeur limite, on utilise ensuite une deuxième valeur d'accélération transversale fixe comme accélération transversale pour produire les signaux de réglage.

6. Procédé selon la revendication 5, **caractérisé en ce que** la deuxième valeur d'accélération transversale fixe correspond à la valeur de l'accélération transversale mesurée lorsque la première valeur limite est dépassée à la baisse et/ou a été dépassée la baisse.

7. Procédé selon la revendication 5 ou 6, **caractérisé en ce que** lorsqu'on utilise la deuxième valeur d'accélération transversale fixe pour produire les signaux de réglage et que la valeur absolue de différence entre l'accélération transversale calculée et l'accélération transversale mesurée passe en dessous de la première valeur limite, on utilise ensuite de nouveau l'accélération transversale mesurée pour produire les signaux de réglage.

8. Procédé selon l'une quelconque des revendications 5 à 7, **caractérisé en ce que** lorsqu'on utilise la deuxième valeur d'accélération transversale fixe pour produire les signaux de réglage et qu'une valeur absolue de différence entre l'accélération transversale calculée et la deuxième valeur d'accélération transversale fixe passe au-dessus d'une quatrième valeur limite ou passe en dessous d'une cinquième valeur limite, on utilise ensuite l'accélération transversale calculée comme accélération transversale pour produire les signaux de réglage.

9. Procédé selon l'une quelconque des revendications 1 à 8, **caractérisé en ce qu'**on utilise l'accélération transversale mesurée pour produire les signaux de réglage des actionneurs à l'extérieur de la des plages de vitesses du véhicule individuellement.

10. Dispositif de stabilisation de roulis d'un véhicule automobile, avec un dispositif de mesure ou de calcul d'une accélération transversale du véhicule automobile et avec un dispositif de commande et/ou de réglage, qui produit des signaux de réglage des actionneurs associés à un essieu avant et à un essieu arrière du véhicule automobile sur la base de l'accélération transversale mesurée ou de l'accélération transversale calculée, lesdits actionneurs mettant à disposition des couples de soutien au niveau de l'essieu avant et/ou de l'essieu arrière pour la stabilisation du roulis, **caractérisé en ce que** le dispositif de commande et/ou de réglage (10) comprend un dispositif (11) de mise en oeuvre du procédé selon l'une quelconque des revendications 1 à 9 ou plusieurs d'entre elles.
